# EUROPEAN PATENT SPECIFICATION

(11) **EP 4 466 125 B1**
(45) Date of publication and mention of the grant of the patent: **03.09.2025**
(21) Application number: 22843433.8
(22) Date of filing: 21.12.2022
(51) Int. Cl.: B27B 17/00, B25F 5/02, B25G 1/00, H05B 1/02

(54) **A BATTERY POWERED CHAINSAW COMPRISING AT LEAST ONE HANDLE HEATING ELEMENT**
BATTERIEBETRIEBENE KETTENSÄGE MIT MINDESTENS EINEM GRIFFHEIZELEMENT
SCIE À CHAÎNE ALIMENTÉE PAR BATTERIE COMPRENANT AU MOINS UN ÉLÉMENT CHAUFFANT DE POIGNÉE

(30) Priority: 21.01.2022 SE 2250056
(43) Date of publication of application: 27.11.2024
(73) Proprietor: Husqvarna AB, 561 82 Huskvarna (SE)
(72) Inventor: SAMEFORS, Joakim, 561 82 Huskvarna (SE); KRANTZ, Jacob, 561 82 Huskvarna (SE); MOLL, Fredrik, 561 82 Huskvarna (SE); CONNYSSON, Mattias, 561 82 Huskvarna (SE); JONASSON, Rebecca, 561 82 Huskvarna (SE)
(86) International application number: PCT/SE2022/051213
(87) International publication number: WO 2023/140762

(56) References cited:
- WO-A1-2013/032374
- SE-B- 421 162
- US-A1- 2006 196 864

## Description

### Technical field

The present disclosure relates to a battery-powered chainsaw comprising a cutting tool in the form of a saw chain running on a guide bar, a front handle at least partially extending transverse to the elongation of the guide bar and a rear handle extending, at least partially, approximately in the elongated direction of the guide bar.

### Background

Such battery-powered chainsaws have become increasingly more popular with improved battery technologies and in many cases replace chainsaws powered by internal combustion engines, especially in cases where saws are used only sporadically, such as for hobby use, or when light weight is especially important, such as for climbing arborists.

It has been desired to include handle heating also in battery powered chainsaws to achieve more comfortable use of the chainsaw. However, this can be difficult in view of the power restrictions resulting from use of batteries.

WO 2013/032374 A1 discloses a battery-powered chainsaw as per the preamble of appended claim 1 including handle heating.

### Summary

One object of the present disclosure is therefore to provide a battery powered chainsaw with handle heating capability in an efficient manner.

This object is achieved by a battery powered chainsaw as defined in claim 1. More specifically, in a battery powered chainsaw of the initially mentioned kind, a battery-powered heating unit is provided comprising at least one heating element in one of the rear handle and the front handle, and a temperature sensor. The heating unit is configured to provide power to the handle/handles based on a reading from the temperature sensor. The heating unit is also configured to provide, upon activation, a temporary power boost. Subsequently, the heating unit provides a steady state power, lower than the power of the power boost. This allows the chainsaw to obtain a reasonably heated handle relatively quickly without depleting the battery too quickly during prolonged use.

The battery-operated heating unit may comprise a first heating element in the rear handle and a second heating element in the front handle. The temperature sensor may be located in the rear handle, for instance.

If two heating elements, the first and second, are provided, they may be series connected.

The duration and level of the power boost may be determined based on a temperature reading acquired at start or activation of the chainsaw. Alternatively, the power boost may be continuously controlled based on a PI-controller, for instance.

The chainsaw may comprise a compartment for a battery, and optionally a short-range communications interface.

### Brief description of the drawings

Fig 1 shows the body of a battery-operated chainsaw.
Fig 2 illustrates the chainsaw of fig 1 with heated areas highlighted.
Fig 3 illustrates the wiring of the handle heating.
Fig 4 shows the heating of the rear handle.
Fig 5 is a flow chart illustrating the provision of power to the handles.

### Detailed description

Chainsaws with handle heating are appreciated, especially by professional forestry workers in cold climates. A chainsaw should be maneuvered with firm grips on the chainsaw handles and this conveys heat very efficiently from the user's hands, even if wearing gloves, resulting in uncomfortably cold hands unless the chainsaw handles are heated.

Early on, chainsaws were provided with handles where some exhaust from the chainsaws internal combustion engine was led through a handle which was heated thereby. In more recent developments, a small generator has been connected to the internal combustion engine, and the electrical energy produced thereby has been used to heat chainsaw handles. In a battery-powered chainsaw however, the available energy is scarcer. Despite the significant improvement in battery technology in recent decades, the energy density is quite low compared to gasoline, and a battery of course needs access to an electric grid or the like to be recharged. Using a large proportion of the available energy for handle heating is not a viable option. Therefore, a more careful approach is needed to achieve handle heating in a battery-powered chainsaw as will be described in the following.

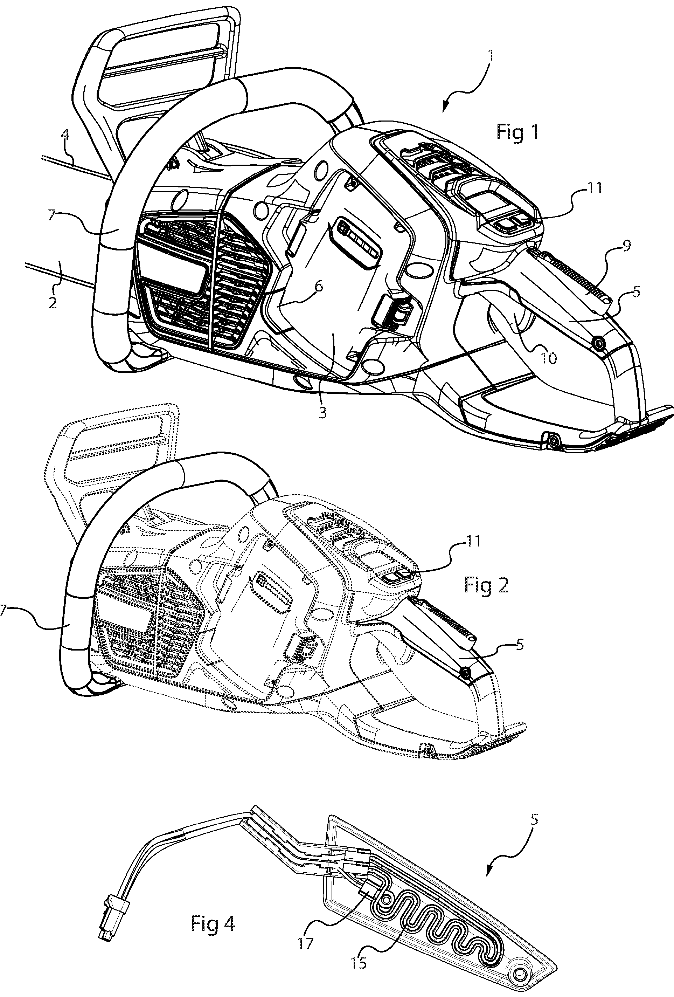

Fig 1 illustrates a chainsaw 1 powered by a battery 3, which is replaceably fitted in a battery compartment 6. The chainsaw 1 has a similar general constitution as a legacy chainsaw, powered by an internal combustion engine, and has a guide bar 2 on which a saw chain 4 runs, powered by an electric motor. It thus comprises a rear handle 5 and a front handle 7. The rear handle 5 is intended to be held by the user's right hand and comprises a lock button 9 that must be pressed down to allow activation of a throttle button 10, the latter being operated by the user's index- and middle fingers or by the user's thumb depending on the orientation of the chainsaw 1. The front handle 7 is intended for the left hand which may be placed at various locations along the front handle 7 depending on which operation is carried out.

The handle heating may be controlled by a user interface including buttons 11, for instance. Fig 2 highlights areas of the rear 5 and front 7 handles that can be heated as a result. If a lower power consumption is desired, it is however possible to heat a smaller portion of the front handle 7. Alternatively, it is also possible to heat only one handle, such as the rear handle 5.

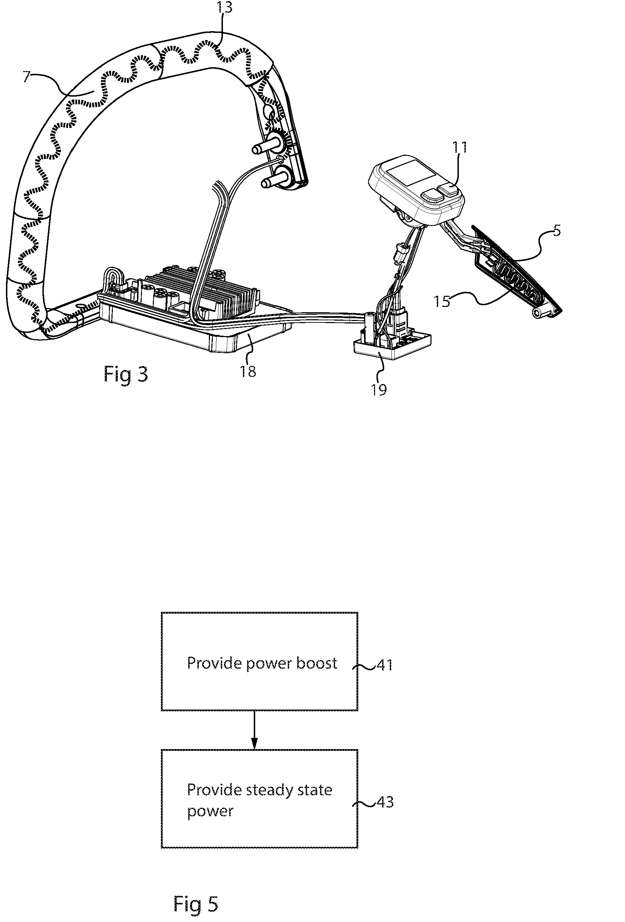

Instead of setting the heating with the illustrated user interface 11, or in combination therewith, it would be possible to provide the chainsaw 1 with a short-range communications interface such as BLUETOOTH and control the heating by means of a nearby smartphone, for instance. It is also possible to store user-specific settings that are activated based on identifying the current user and base the set desired temperature thereon. As yet another option, it is possible to identify the present use situation, e.g. tree felling or firewood cutting, and to base the set temperature depending on use. Fig 3 illustrates the wiring of the handle heating unit 19 which connects to the normal electric system 18 of the chainsaw, used to control the chainsaw motor, which therefore also can be considered to comprise the heating unit 19. There is thus provided resistive heating elements 13, 15 to the front and rear handles 7, 5, respectively. Those resistive heating elements are dimensioned keeping the specific heat of the respective handles in mind as well as the expected radiation from the handles 5, 7. Therefore a resistive heating wire 13 of the front handle 7 is devised to generate more heat for a given setting as the front handle is bigger and made in metal which radiates heat to the surroundings to a greater extent. It is however possible to drive a single current through both heating wires 13, 15 in a series connection.

Heating may be provided with a resistive heating wire, or by a resistive conductor on a printed circuit board. Typically, in the rear handle a copper conductor of about 1,2m may be provided, printed meandering on a circuit board.

Fig 4 shows the heating of the rear handle 5 in greater detail where the heating conductor 15 runs therethrough. A temperature sensor 17 is located in the rear handle to provide a reading of the instantaneous temperature. It would be possible to place the sensor 17 in the front handle 7 as an alternative or to place a temperature sensor in each handle.

The sensor may typically be a NTC-resistor, although other components such as PTC- or RTD-resistors are conceivable as well. In principle, it would also be possible to measure the voltage drop over one of the heating elements to provide a temperature reading.

However, locating the temperature sensor 17 in the rear handle is more suitable for production as this handle is usually made in plastic and can be provided with a removable shell part to facilitate mounting in the handle 5, which part is removed in fig 4. The front handle 7 in contrast is usually made by from a bent metal tube. Also, using one and only one temperature sensor for both handles as shown still provides the possibility of carrying out the control scheme to be discussed, while of course providing reduced costs as compared to using two or more sensors. It should be noted that in some versions of the control scheme to be discussed it is as useful to place the sensor at another location than in the handles.

Very generally thus, the present disclosure with reference to fig 1 provides a battery-powered chainsaw 1 comprising a cutting tool, typically in the form of a saw chain 4 running on a guide bar 2. A front handle 7 extends at least partially transverse to the elongation of the guide bar 2 and a rear handle 5 extends, at least partially, approximately in the elongated direction of the guide bar 2. With reference to fig 3, a battery-operated heating unit includes a first heating element 15 in the rear handle 5, a second heating element 13 in the front handle 7, and a temperature sensor 17.

The following control mechanism is devised to provide comfortable handle heating without excessively wasting battery power. When the user first begins to operate the chainsaw, the handles are likely close to the same temperature as the ambient air, which may be several degrees Celsius below zero in winter conditions. This may be very uncomfortable, especially if the user wears thin gloves or even no gloves at all. There is therefore a desire to raise the temperature in the handles 5, 7 quickly by providing a high energy flow thereto.

However, as the handles come closer to a comfortable temperature, it should instead be preferred to conserve battery power. Also, after working physically for a while, the user may find somewhat cooler handles more comfortable.

Therefore, in the present disclosure, the heating unit 19 is configured to provide power to the first 15 and second 13 heating element based on a reading from the temperature sensor 17. More specifically, the heating unit 19 provides, upon activation, a temporary power boost to the first and second heating elements 15, 13. Subsequently, a steady state power may be provided to the first 15 and second 13 heating elements, lower than the power of the power boost. This can be visualized in a very basic manner by the flow chart of fig 5 illustrating the steps of providing 41 a power boost and subsequently providing 43 a steady state power.

There are different, more specific ways of accomplishing this. To start with, in a first example, it is possible to measure the temperature by means of the sensor 17 at the start or activation of the chainsaw 1 and to determine a duration and/or level of a power boost, for instance providing about 60 W for a few minutes, and then a steady state level of for instance 15-20W, as long as the chainsaw runs or until the battery has been depleted to a predetermined level. As a comparison, a chainsaw motor may work in a range close to 1.5 kW.

This power fed to the handles 5, 7 may be provided using a stored lookup table based on the temperature reading or using a very basic algorithm. In this case, the ambient temperature at start or activation of the chainsaw is the important parameter and measuring the temperature can if desired take place at another location of the saw than one of the handles.

In another example, the temperature sensor 17 is located in one of the handles 5, 7 as illustrated in fig 4, and the power boost may vary depending on the instantaneous temperature. For instance, it is possible to set a desired target temperature for the sensor 7 and control the power applied based on the difference between desired and actual temperature, for instance using a PI- or PID controller. Then, the power boost lasts until a target temperature is reached, but the applied power decreases as the measured temperature approaches the target temperature where the steady state power is supplied. Needless to say, such control schemes may be varied in different ways, for instance disabling the handle heat function as a whole if the ambient temperature is above a predetermined threshold.

The invention is not restricted to the described embodiments and may be varied and altered in diverse ways within the scope of the appended claims.

## Claims

1. A battery powered chainsaw (1) comprising a cutting tool in the form of a saw chain (4) running on a guide bar (2), a front handle (7) at least partially extending transverse to the elongation of the guide bar (2) and a rear handle (5) extending, at least partially, approximately in the elongated direction of the guide bar (2), **characterized by** a battery-operated heating unit (19) comprising at least one heating element (13, 15) in one of the rear handle (5), and the front handle (7), and a temperature sensor (17),
wherein the heating unit (19) is configured to provide power to the first (15) and/or second (13) heating element based on a reading from the temperature sensor (17), and
wherein the heating unit (19) is configured to provide, upon activation, a temporary power boost to the first (15) and/or second (13) handle and, subsequently, to provide a steady state power to the first (15) and/or second (13) handle, lower than the power of the power boost.

2. Battery powered chainsaw (1) according to claim 1, wherein the battery-operated heating unit (19) comprises a first heating element (15) in the rear handle (5) and a second heating element (13) in the front handle (7).

3. Battery powered chainsaw (1) according to claim 1 or 2, wherein the temperature sensor (17) is located in the rear handle (5).

4. Battery powered chainsaw (1) according to claim 2 or 2 and 3, wherein the first and second heating elements are series connected.

5. Battery powered chainsaw (1) according to any of the preceding claims, wherein the duration and level of the power boost is determined based on a temperature acquired at start or activation of the chainsaw.

6. Battery powered chainsaw (1) according to any of the preceding claims, wherein the power boost is continuously controlled.

7. Battery powered chainsaw (1) according to claim 6, wherein power is continuously controlled based on a temperature reading and a PI-regulator.

8. Battery powered chainsaw (1) according to any of the preceding claims, comprising a compartment for a battery.

9. Battery powered chainsaw (1) according to any of the preceding claims, comprising a short-range communications interface.

## Patentansprüche

1. Batteriebetriebene Kettensäge (1), umfassend ein Schneidwerkzeug in Form einer Sägekette (4), die auf einer Führungsschiene (2) läuft, einen vorderen Griff (7), der sich mindestens teilweise quer zur Längserstreckung der Führungsschiene (2) erstreckt und einen hinteren Griff (5), der sich mindestens teilweise etwa in der Längsrichtung der Führungsschiene (2) erstreckt, **gekennzeichnet durch** eine batteriebetriebene Heizeinheit (19), umfassend mindestens ein Heizelement (13, 15) in einem von dem hinteren Griff (5) und dem vorderen Griff (7), und einen Temperatursensor (17),
wobei die Heizeinheit (19) konfiguriert ist, um dem ersten (15) und/oder zweiten (13) Heizelement basierend auf einem Messwert des Temperatursensors (17) Leistung bereitzustellen, und
wobei die Heizeinheit (19) konfiguriert ist, um bei Aktivierung eine vorübergehende Leistungserhöhung an den ersten (15) und/oder zweiten (13) Griff bereitzustellen und anschließend eine Dauerleistung an den ersten (15) und/oder zweiten (13) Griff bereitzustellen, die niedriger ist als die Leistung der Leistungserhöhung.

2. Batteriebetriebene Kettensäge (1) nach Anspruch 1, wobei die batteriebetriebene Heizeinheit (19) ein erstes Heizelement (15) in dem hinteren Griff (5) und ein zweites Heizelement (13) in dem vorderen Griff (7) umfasst.

3. Batteriebetriebene Kettensäge (1) nach Anspruch 1 oder 2, wobei der Temperatursensor (17) sich im hinteren Griff (5) befindet.

4. Batteriebetriebene Kettensäge (1) nach Anspruch 2 oder 2 und 3, wobei das erste und das zweite Heizelement in Reihe geschaltet sind.

5. Batteriebetriebene Kettensäge (1) nach einem der vorstehenden Ansprüche, wobei die Dauer und die Höhe der Leistungserhöhung basierend auf einer Temperatur, die beim Start oder bei der Aktivierung der Kettensäge erfasst wird, bestimmt wird.

6. Batteriebetriebene Kettensäge (1) nach einem der vorstehenden Ansprüche, wobei die Leistungserhöhung kontinuierlich gesteuert wird.

7. Batteriebetriebene Kettensäge (1) nach Anspruch 6, wobei die Leistung basierend auf einer Temperaturmessung und einem Pl-Regler kontinuierlich gesteuert wird.

8. Batteriebetriebene Kettensäge (1) nach einem der vorstehenden Ansprüche, umfassend ein Fach für eine Batterie.

9. Batteriebetriebene Kettensäge (1) nach einem der vorstehenden Ansprüche, umfassend eine Kurzstreckenkommunikationsschnittstelle.

## Revendications

1. Tronçonneuse à batterie (1) comprenant un outil de coupe sous la forme d'une chaîne (4) se déplaçant sur un guide-chaîne (2), une poignée avant (7) s'étendant au moins partiellement transversalement à l'allongement du guide-chaîne (2) et une poignée arrière (5) s'étendant, au moins partiellement, approximativement dans le sens d'allongement du guide-chaîne (2), **caractérisée par** une unité de chauffage (19) fonctionnant sur batterie et comprenant au moins un élément chauffant (13, 15) dans l'une de la poignée arrière (5) et de la poignée avant (7), et un capteur de température (17),
dans laquelle l'unité de chauffage (19) est configurée pour alimenter le premier (15) et/ou le second (13) élément chauffant en fonction d'une lecture du capteur de température (17), et
dans laquelle l'unité de chauffage (19) est configurée pour fournir, lors de l'activation, une amplification de puissance temporaire à la première (15) et/ou à la seconde (13) poignée et, par la suite, pour fournir une puissance d'état stable à la première (15) et/ou à la seconde (13) poignée, inférieure à la puissance de l'amplification de puissance.

2. Tronçonneuse à batterie (1) selon la revendication 1, dans laquelle l'unité de chauffage (19) fonctionnant sur batterie comprend un premier élément chauffant (15) dans la poignée arrière (5) et un second élément chauffant (13) dans la poignée avant (7).

3. Tronçonneuse à batterie (1) selon la revendication 1 ou 2, dans laquelle le capteur de température (17) est situé dans la poignée arrière (5).

4. Tronçonneuse à batterie (1) selon la revendication 2 ou 2 et 3, dans laquelle les premier et second éléments chauffants sont connectés en série.

5. Tronçonneuse à batterie (1) selon l'une quelconque des revendications précédentes, dans laquelle la durée et le niveau de l'amplification de puissance sont déterminés en fonction d'une température acquise au démarrage ou à l'activation de la tronçonneuse.

6. Tronçonneuse à batterie (1) selon l'une quelconque des revendications précédentes, dans laquelle l'amplification de puissance est régulée en continu.

7. Tronçonneuse à batterie (1) selon la revendication 6, dans laquelle la puissance est régulée en continu en fonction d'une lecture de température et d'un régulateur PI.

8. Tronçonneuse à batterie (1) selon l'une quelconque des revendications précédentes, comprenant un compartiment pour une batterie.

9. Tronçonneuse à batterie (1) selon l'une quelconque des revendications précédentes, comprenant une interface de communications à courte portée.
